# FASCICULE DE BREVET EUROPEEN

(11) **EP 0 545 896 B1**
(45) Date de publication et mention de la délivrance du brevet: **12.10.1994**
(21) Numéro de dépôt: 93101256.1
(22) Date de dépôt: 29.05.1989
(51) Int. Cl.: B60J 10/02, B60J 1/02, B29C 47/02, C03C 27/04

(54) **Vitrage automobile prêt à monter et procédé de fabrication**
Direkt-Fahrzeugverglasung und Herstellung
Direkt motor vehicle glazing and manufacture

(30) Priorité: 03.06.1988 DE 3818930
(43) Date de publication de la demande: 09.06.1993
(62) Demande divisionnaire de: 89401452.1
(73) Titulaire: SAINT-GOBAIN VITRAGE, 92400 Courbevoie (FR); VEGLA Vereinigte Glaswerke GmbH, D-52066 Aachen (DE)
(72) Inventeur: Kunert, Heinz, W-5000 Köln 41 (DE)
(74) Mandataire: Muller, René

(56) Documents cités:
- EP-A- 0 121 480
- EP-A- 0 121 481
- EP-A- 0 312 496
- DE-A- 3 323 006
- US-A- 3 715 256

## Description

La présente invention concerne un vitrage et son procédé de préparation, en particulier un vitrage automobile, en vue de son montage dans un cadre de baie par collage de la zone marginale du vitrage à une aile de fixation du cadre de baie, dans lequel au moins deux cordons partiels de colle de section transversale calibrée sont déposés sur le vitrage, chaque fois par extrusion d'une masse de colle à l'aide d'une buse d'extrusion calibrée, un des cordons partiels étant déjà durci lors de la mise en place du vitrage dans le cadre de baie tandis que l'autre cordon partiel constitue le cordon de colle actif pour la fixation du vitrage dans ledit cadre.

Le document DE-A-33 23 006 décrit un vitrage comportant un profil composé de deux cordons dont l'un possède une lèvre qui déborde vers l'extérieur. Cette lèvre permet essentiellement de former, lors du montage du vitrage dans une baie de carrosserie, un canal permettant l'évacuation de l'eau provenant du toit.

Par contre, elle ne possède pas les propriétés mécaniques lui permettant de positionner le vitrage lors de son montage.

D'autre part, les cordons sont des éléments préfabriqués qui sont collés sur le vitrage. Ce document ne concerne pas des cordons de colle déposés par extrusion sur le vitrage.

Un procédé de ce type est connu d'après le document EP-A-0121481 B1. Dans ce procédé connu, un premier cordon partiel de colle est déjà appliqué sur le vitrage dans la verrerie ou à un moment quelconque avant le montage dans la carrosserie du véhicule. Ceci supprime, dans la chaîne de montage des véhicules, les opérations nécessaires pour nettoyer et apprêter les vitrages, ce qui, au niveau de la chaîne de montage elle-même, représente une simplification notable. Un autre avantage significatif de ce procédé réside dans le fait qu'à l'aide de ce premier cordon partiel de colle, des pièces du cadre de structure, comme par exemple des moulures, des couvre-joints profilés, des bordures d'entretoisement ou des fils de déchirure peuvent être préalablement fixés à demeure au vitrage. De cette façon, d'autres opérations, qui sans cela devraient être effectuées directement sur la chaîne de montage, peuvent l'être par avance et à un moment quelconque, et, de ce fait, les opérations sur la chaîne de montage elle-même se trouvent nettement simplifiées.

Dans le cas du procédé connu, le cordon de colle de montage est appliqué immédiatement avant la mise en place du vitrage dans le cadre de la baie sur le cordon partiel durci ou sur l'aile de fixation dudit cadre, c'est-à-dire directement sur la chaîne de montage des véhicules automobiles.

Il est également connu de la demande de brevet EP-A-0 121 480 une technique de montage de vitrages du type pare-brise sur un repli de tôle de carrosserie automobile, technique consistant à déposer simultanément par co-extrusion un cordon adhésif et un fil souple qui possède une forte résistance à la traction, fil servant d'élément de découpe pour couper le cordon lors du montage. Selon un mode de réalisation, le cordon est formé d'un premier cordon profilé dit intermédiaire qui durcit rapidement après dépôt et qui est muni d'un appendice débordant de la périphérie du vitrage afin de protéger les arêtes de celui-ci lors de son transport et/ou stockage avant montage. Ce cordon est associé par une liaison étanche à un cordon d'adhésif à proprement dit. Après montage, l'appendice débordant du cordon profilé intermédiaire, dur, conserve sa forme initiale, soit une forme de lèvre sensiblement parallèle au chant du vitrage.

L'invention a pour but la mise au point d'un vitrage équipé d'une manière telle qu'il puisse y avoir pontage ou obturation de l'interstice séparant la surface du chant du vitrage de l'aile de contrepartie du cadre de fenêtre.

Un autre but de l'invention est la mise au point d'un vitrage équipé d'une manière telle qu'il soit maintenu bien centré dans l'aile du cadre de fenêtre pendant le durcissement de la colle de montage.

L'invention concerne donc un vitrage, particulièrement vitrage automobile destiné à être collé directement dans le cadre de la baie d'une fenêtre, vitrage équipé par l'extrusion d'un polymère sur la surface du verre du vitrage, en face de la tôle de la baie, d'un cadre profilé comportant un appendice qui, après polymérisation, servira d'élément de protection pendant la prise de la colle fixant le vitrage, l'appendice étant placé le long de la périphérie du vitrage et débordant du verre (Vitrage du type de celui divulgué par EP-A-0 121 480). Dans ce vitrage, l'appendice est constitué selon l'invention par une lèvre (20) débordant du verre (1) en étant sensiblement parallèle à la surface du verre, le cordon de colle profilé (18) y compris sa lèvre (20) étant constitué d'un élastomère conférant à la lèvre des caractéristiques élastiques et mécaniques telles que lorsque le vitrage (1) est posé, la lèvre (20) s'appuie sur l'aile (5) du cadre de fenêtre parallèle au chant (2) du vitrage (1) pour le centrer dans la baie.

Avantageusement, la matière constituant la lèvre lui fournit une résistance accrue aux UV ou aux intempéries. Dans le procédé de préparation de ce vitrage, ladite matière permet un durcissement rapide évitant sa déformation. Le cordon et la lèvre peuvent être en outre coextrudés à partir de matériaux différents.

Des variantes du vitrage et de son procédé de fabrication de l'invention ressortiront des revendications dépendantes et des exemples de réalisation qui sont décrits en détail ci-après avec référence aux dessins.
La figure 1 illustre une forme d'exécution d'un vitrage automobile préparé pour le montage,
La figure 2 illustre la forme d'exécution représentée sur la figure 1 après son montage dans la carrosserie du véhicule.

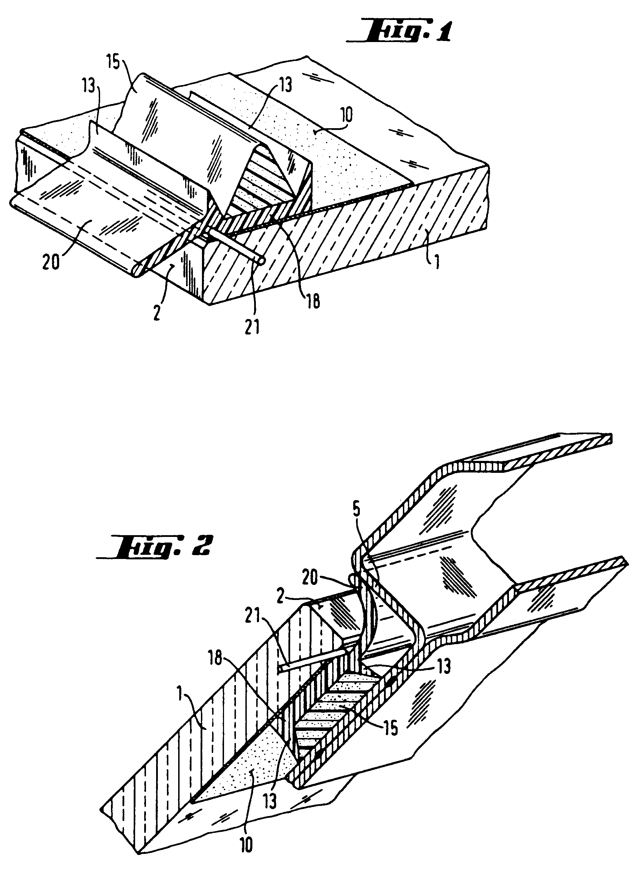

D'après les figures 1 et 2, le vitrage 1 est pourvu, tout autour de sa zone marginale, d'un revêtement opaque 10 qui, d'une part, empêche toute vision de l'extérieur sur la zone collée et, d'autre part, protège les couches de colle contre le rayonnement UV qui, sinon, entraînerait une fraagilisation de la colle. Le revêtement 10 est habituellement fait d'un émail à cuire qui a été cuit au cours du chauffage intervenant dans le bombage et/ou dans les opérations de trempe du vitrage.

Lors de la réalisation d'une jonction collée, une préparation appropriée de la surface du verre à laquelle la masse de colle doit adhérer, fait également partie des opérations usuelles. En règle générale, cette préparation de la surface consiste en un traitement à l'aide d'un liquide de nettoyage adapté suivi d'un revêtement au moyen d'une couche de fond adéquate, mais cette préparation du vitrage dépend chaque fois du système de colle utilisé.

Le fait d'installer déjà le cadre profilé de pourtour 3 sur le vitrage avant le montage de ce vitrage dans le cadre de baie a le grand avantage que le montage du vitrage sur la chaîne de montage elle-même est simplifié. Pour atteindre ce but, il faut cependant que le collage de la bande ou du cadre profilé au vitrage soit réalisé lorsque cet élément présente, par exemple, la section transversale en L représentée. Une section transversale en L est cependant nécessaire lorsqu'un montage aérodynamique du vitrage doit être réalisé, c'est-à-dire lorsque aucune pièce d'encadrement ne peut faire saillie sur la surface extérieure du vitrage. Le collage du cadre profilé au vitrage est réalisé à l'aide du cordon de colle profilé 18 qui remplit, par ailleurs, les fonctions connues mentionnées plus haut. Le cordon de colle profilé 18 présente de préférence une section transversale essentiellement en forme de U, les nervures latérales 13 ayant pour tâche, lors de la mise en place du vitrage dans le cadre, de délimiter latéralement le cordon de colle 15.

Le cordon de colle 18 profilé en forme de chenal et le cordon de colle 15 appliqué sur ce cordon de colle 18 sont déposés en une seule et même opération sur le vitrage par coextrusion. Dans ce cas, on utilise pour l'extrusion du cordon de colle 18, une masse de colle qui durcit en un temps relativement bref et qui assure une jonction solide du cadre profilé au vitrage. Pour le cordon de colle 15 qui remplit la fonction de la colle de montage, on utilise une masse de colle qui, d'une part, est compatible avec le cordon de colle 18, c'est-à-dire qui adhère convenablement au cordon de colle 18, et qui, d'autre part, présente une durée d'emploi limite nettement plus longue et reste plastiquement déformable et adhésive pendant un délai prédéfini.

La préparation du vitrage pour le montage s'effectue avantageusement dans un poste de travail précédant la chaîne de montage, dans lequel les vitrages sont préparés de la manière conforme à l'invention, par exemple, un laps de temps de durée déterminée avant l'instant de montage. De cette façon, les vitrages peuvent être préparés, par exemple, quelques heures à plusieurs jours avant leur montage et être fournis à la chaîne de montage au moment où ils y sont nécessaires.

Lorsqu'on utilise pour le cordon de colle, profilé 18 et le cordon de colle de montage 15 des masses de colle présentant des durées d'emploi limites différentes, on peut utiliser avec un avantage particulier des colles de polyuréthane à un seul composant ou à plusieurs composants qui se sont avérées satisfaisantes comme colles pour le montage de vitrages automobiles. En particulier dans le cas de colles de polyuréthane à plusieurs composants, il est connu que le temps de durcissement peut être réglé entre de larges limites par diverses mesures. Des compositions de colle appropriées sont décrites, par exemple, dans les documents DE-A-3 545 899, EP-A-0 153 456 et EP-A-0 238 890. A l'aide des colles connues de ce type, il est possible de fabriquer des vitrages préparés pour le montage dans lesquels le cordon de colle 18 est durci, par exemple, après une heure, tandis que la durée d'emploi limite du cordon de colle de montage 15 est d'au moins trois heures.

Une forme d'exécution particulièrement avantageuse du procédé consiste à utiliser, pour le cordon de colle profilé 18, une colle de polyuréthane à un seul ou à plusieurs composants, qui durcit en un temps relativement bref, et de prévoir pour le cordon de colle 15, une colle de polyuréthane à plusieurs composants, contenant un composant d'amorçage ou de réaction sous une forme inactivée, par exemple sous forme de microcapsules, l'activation de ce composant d'amorçage ou de réaction s'effectuant par exemple par chauffage ou par irradiation adéquate du cordon de colle 15 ou de l'ensemble du vitrage préparé, immédiatement avant le montage du vitrage.

Dans l'exemple de réalisation représenté sur les fig. 1 et 2, le vitrage 1 en outre pourvu, le long de sa zone marginale, d'un revêtement opaque 10 et, pour le montage dans le cadre de fenêtre du véhicule, il est prééquipé d'un cordon de colle profilé en forme de cadre 18 et simultanément d'un cordon de colle de montage 15. Le cordon de colle profilé 18 présente dans ce cas, comme tel, une lèvre d'étanchéité 20 qui dépasse du pourtour du vitrage et qui a pour fonction, dans l'état monté du vitrage, de ponter ou d'obturer l'interstice séparant la surface du chant 2 et l'aile de contrepartie 5 du cadre de fenêtre. De plus, cette lèvre d'étanchéité 20 a pour fonction, lors de la mise en place du vitrage dans la feuillure du cadre de fenêtre, de servir de lèvre de centrage. Elle assure que la surface périphérique 2 du vitrage se trouve maintenue de tous côtés à la même distance de l'aile 5 du cadre de fenêtre et elle retient le vitrage dans cette position centrée pendant le durcissement de la colle de montage. Cette lèvre d'étanchéité 20 est, dans ce cas, par une configuration adéquate de la buse d'extrusion, formée directement lors de l'extrusion du cordon profilé 18 et fait par conséquent partie de ce cordon profilé 18 lui-même. De plus, le cordon profilé 18 présente à nouveau une section transversale en forme de chenal comportant deux nervures latérales 13 qui délimitent la masse 15 de la colle de montage latéralement.

Le durcissement du cordon profilé 18 doit avoir eu lieu au moment du montage du vitrage. Un durcissement rapide de ce cordon profilé 18 est également nécessaire pour que la lèvre d'étanchéité saillante libre 20 ne se déforme pas. De plus, le temps de durcissement doit être le plus court possible pour assurer la fixation du fil de déchirure 21 qui, lors de l'extrusion du cordon profilé 18, est noyé dans ce cordon de colle. Ce fil de déchirure 21 a pour tâche de faciliter le démontage du vitrage du cadre de fenêtre, parce qu'il sert de fil de séparation pour sectionner le cordon de colle.

La lèvre d'étanchéité 20 peut, le cas échéant, être faite d'une matière différente de celle du reste du cordon profilé 18 et être fabriquée par coextrusion en même temps que le cordon profilé 18. De cette manière, il est possible de fabriquer des lèvres d'étanchéité possédant des propriétés modifiées, qui présentent, par exemple, une stabilité accrue à l'égard des rayons UV et/ou une résistance accrue aux intempéries car, contrairement au reste du cordon profilé 18, la lèvre d'étanchéité est en partie exposée directement aux intempéries.

En même temps que l'extrusion du cordon profilé 18 a lieu l'extrusion du cordon de colle de montage 15 qui est déposé dans le chenal du cordon profilé 18. La masse de colle formant le cordon profilé 18 est à nouveau différente de la masse de colle 15 formant le cordon de colle de montage qui, pour sa part, possède une durée d'emploi limite relativement longue de plusieurs heures à plusieurs jours. Les masses de colle respectives peuvent, en l'occurrence, être les mêmes que celles qui ont été décrites à propos des figures 1 et 2 de EP-A-0 345 134, publiée le 6 décembre 1989, le présent brevet ayant fait l'objet d'une demande divisionnaire de EP-A-0 345 134.

## Revendications

1. Vitrage, particulièrement vitrage automobile destiné à être collé directement dans le cadre de la baie d'une fenêtre, vitrage équipé par l'extrusion d'un polymère sur la surface du verre du vitrage, en face de la tôle de la baie, d'un cadre profilé comportant un appendice qui, après polymérisation, servira d'élément de protection pendant la prise de la colle fixant le vitrage, l'appendice étant placé le long de la périphérie du vitrage et débordant du verre, **caractérisé en ce que** l'appendice est une lèvre (20) débordant du verre (1), en étant sensiblement parallèle à la surface du verre, le cordon de colle profilé (18) y compris sa lèvre (20) étant constitué d'un élastomère conférant à la lèvre des caractéristiques élastiques et mécaniques telles que lorsque le vitrage (1) est posé, la lèvre (20) s'appuie sur l'aile (5) du cadre de fenêtre parallèle au chant (2) du vitrage pour le centrer dans la baie.

2. Vitrage selon la revendication 1, caractérisé en ce que la matière constituant la lèvre (20) lui fournit une résistance accrue aux UV ou aux intempéries.

3. Procédé de préparation d'un vitrage selon la revendication 1 ou 2, caractérisé en ce que la nature de la matière dont elle est constituée permette un durcissement rapide et évite la déformation de la lèvre (20).

4. Procédé selon la revendication 3, caractérisé en ce que le cordon profité (18) et la lèvre (20) sont coextrudés à partir de matériaux différents.

5. Procédé selon la revendication 3 ou 4, caractérisé en ce que la matière extrudée pour constituer la lèvre (20) lui procure une résistance accrue aux UV ou aux intempéries.

## Claims

1. A window pane, particularly a car window pane, intended to be glued directly to the frame of a window opening, which pane is provided, by extrusion of a polymer on the surface of the glass of the window pane, opposite the panel of the opening, with a shaped frame including an appendage which, after polymerization, will act as a protective feature during setting of the glue fixing the window pane, such appendage being located along the periphery of the window pane and jutting out from the glass, characterized in that the appendage is a lip (20) jutting out from glass (1), being substantially parallel to the surface of the glass, the bead of shaped glue (18) including its lip (20) being comprised of an elastomer imparting to the lip elastic and mechanical properties such that, when pane (1) is fitted, lip (20) bears on wing (5) of the window frame parallel to edge (2) of the window pane to centre it in the opening.

2. A window pane according to claim 1, characterized in that the constituent material of lip (20) provides it with improved resistance to UV radiation or to weather action.

3. A process for the preparation of a window pane according to claim 1 or 2, characterized in that the nature of the material of which it is constituted allows rapid hardening and avoids deformation of lip (20).

4. A process according to claim 3, characterized in that shaped bead (18) and lip (20) are coextruded from different materials.

5. A process according to claim 3 or 4, characterized in that the material extruded to form lip (20) imparts to it improved resistance to UV radiation or to weather action.

## Patentansprüche

1. Verglasung, insbesondere für die Direktverklebung im Rahmen einer Fensteröffnung bestimmte Autoglasscheibe, die durch Extrusion eines Polymers auf der Oberfläche der Glasscheibe gegenüber dem Befestigungsflansch des Fensterrahmens mit einem Profilrahmen versehen ist, der nach dem Aushärten während des Abbindens des die Glasscheibe fixierenden Klebers einen als Schutzelement dienenden, entlang dem Scheibenumfang verlaufenden und über die Glasscheibe überstehenden Steg aufweist,
**dadurch gekennzeichnet**, daß der Steg eine über die Glasscheibe (1) überstehende Lippe (20) ist, die im wesentlichen parallel zur Glasoberfläche verläuft, und daß der Profilstrang (18) einschließlich der Lippe (20) aus einem Elastomer besteht, das der Lippe derartige elastische und mechanische Eigenschaften verleiht, daß die Lippe (20) beim Einsetzen der Glasscheibe (1) sich auf dem zur Umfangsfläche (2) der Glasscheibe parallel verlaufenden Flansch (5) des Fensterrahmens abstützt und die Glasscheibe in der Fensteröffnung zentriert.

2. Verglasung nach Anspruch 1, dadurch gekennzeichnet, daß die die Lippe (20) bildende Masse der Lippe eine erhöhte Beständigkeit gegen UV-Strahlung oder gegen Witterungseinflüsse verleiht.

3. Verfahren zur Herstellung einer Verglasung nach Anspruch 1 oder 2, dadurch gekennzeichnet, daß die Natur der Masse, aus der die Lippe besteht, ein rasches Aushärten erlaubt und die Deformation der Lippe (20) vermeidet.

4. Verfahren nach Anspruch 3, dadurch gekennzeichnet, daß der Profilstrang (18) und die Lippe (20) aus unterschiedlichen Materialien koextrudiert werden.

5. Verfahren nach Anspruch 3 oder 4, dadurch gekennzeichnet, daß die die Lippe (20) bildende extrudierte Masse der Lippe eine erhöhte Beständigkeit gegen UV-Strahlung oder gegen Witterungseinflüsse verleiht.
